# FASCICULE DE BREVET EUROPEEN

(11) **EP 1 600 406 B1**
(45) Date de publication et mention de la délivrance du brevet: **21.05.2008**
(21) Numéro de dépôt: 04012589.0
(22) Date de dépôt: 27.05.2004
(51) Int. Cl.: B65G 47/51, B65G 51/02

(54) **Installation pour la fabrication de tuyaux d'irrigation du type goutte-à-goutte**
Anlage zum Herstellen von Tropfbewässerungsschläuchen
Plant for manufacturing drip irrigation hoses

(43) Date de publication de la demande: 30.11.2005
(73) Titulaire: Kertscher, Eberhard, 1462 Yvonand (CH); The Thomas Machines SA, 2108 Couvet (CH)
(72) Inventeur: Bernauer, Thomas, 2000 Neuchâtel (CH); Kertscher, Eberhard, 1462 Yvonand (CH)
(74) Mandataire: Ravenel, Thierry Gérard Louis

(56) Documents cités:
- EP-A- 0 715 926
- FR-A- 1 483 406
- FR-A- 2 769 010
- SU-A1- 757 293
- US-B1- 6 364 088

## Description

La présente invention est relative à une installation de fabrication de tuyaux d'irrigation goutte à goutte comportant un dispositif accumulateur pour goutteurs.

Il est de technique courante d'utiliser, pour certaines irrigations, des tuyaux dits "goutte-à-goutte". Il s'agit de tuyaux dont la paroi est percée, à des intervalles de distance fixés à l'avance, par des trous de petit diamètre par lesquels l'eau s'écoule dans le sol. Pour contrôler avec précision le débit des trous, on prévoit au niveau de chaque trou un limiteur de débit couramment appelé "goutteur" qui se compose d'une pièce en matière plastique creuse qui est collée sur la paroi interne du tuyau. Cette pièce présente, du côté tourné vers la paroi intérieure du tuyau, une partie en creux qui forme une chambre collectrice. Cette chambre collectrice est reliée à l'espace intérieur du tuyau par un conduit formant labyrinthe constitué par une rainure préparée à l'avance sur la face cylindrique du goutteur qui est destinée à être tournée vers la face interne du tuyau.

Dans les installations de fabrication de tuyaux d'irrigation goutte-à-goutte comme par exemple cette décrite dans la demande de brevet EP 0 715 926, des goutteurs sont amenés de manière régulière dans un poste d'extrusion et de soudage à partir d'un dispositif d'approvisionnement tel qu'un bol centrifugeur et orienteur permettant de fournir des goutteurs selon une orientation déterminée. Dans le poste d'extrusion et de soudage, le tuyau est produit en continu et les goutteurs sont soudés à intervalles réguliers à la paroi intérieure du tuyau encore chaud afin qu'ils se collent contre celle-ci en fondant localement. Une fois l'ensemble tuyau-goutteurs refroidi dans un bac à eau, un trou est percé dans la paroi du tuyau, au droit de la chambre collectrice.

Pour compenser les éventuels problèmes d'interruption d'alimentation en pièces pouvant provenir du dispositif d'approvisionnement, les installations de ce type comprennent généralement un dispositif accumulateur disposé entre le dispositif d'approvisionnement et le poste d'extrusion et de soudage. Ce dispositif accumulateur constitue un réservoir tampon de pièces qui permet de continuer la production du tuyau même en cas de dysfonctionnement du dispositif d'approvisionnement.

La cadence de soudage des goutteurs au niveau du poste d'extrusion et de soudage est actuellement de l'ordre de 400 goutteurs à la minute. Sachant que la remise en marche du dispositif d'approvisionnement après un arrêt de celui-ci par exemple parce qu'un goutteur s'est coincé nécessite un temps d'intervention de l'ordre de 5 à 10 secondes, il faut prévoir une réserve tampon de l'ordre de 70 goutteurs afin que l'arrêt momentané dudit dispositif d'approvisionnement ne se fasse pas ressentir au niveau du poste d'extrusion et de soudage. Par sécurité, le nombre de goutteurs de la réserve tampon est multiplié par deux, car on ne peut pas exclure que le dispositif d'approvisionnement ne s'arrête pas deux fois de suite à intervalles de temps rapprochés. En conditions normales d'exploitation, le nombre de goutteurs de la réserve tampon avoisine donc les 150 unités. Or, la longueur typique d'un goutteur est de l'ordre de 35 mm. Les goutteurs étant amenés selon un chemin généralement rectiligne depuis le dispositif d'approvisionnement jusqu'au poste d'extrusion et de soudage, la longueur de la réserve tampon doit donc être au moins de cinq mètres.

Afin d'améliorer la productivité, la tendance actuelle est d'augmenter les vitesses de fabrication et d'atteindre une cadence de soudage des goutteurs proche des 1000 goutteurs à la minute. A terme, le nombre de goutteurs de la réserve tampon devra donc être multiplié par un facteur supérieur à deux. Dans l'état actuel des choses, la longueur résultante de la réserve tampon atteindrait les dix à douze mètres, ce qui n'irait pas sans poser des problèmes. Les ateliers qui abritent ce genre d'installation devraient être plus grands, ce qui conduirait à des coûts financiers supplémentaires. Par ailleurs, les différents postes de la ligne de fabrication seraient plus éloignés les uns des autres, ce qui obligerait l'opérateur à se déplacer rapidement d'un poste à l'autre et rendrait pratiquement impossible une surveillance efficace de la ligne de fabrication dans son ensemble.

Les documents FR 1 483 406, US 6 364 088, FR 2 769 010 et SU 757 293 décrivent des dispositifs accumulateurs de pièces comprenant un chemin de guidage des pièces, ce chemin de guidage se composant d'une zone d'entrée et d'une zone sortie des pièces entre lesquelles s'étend une zone de stockage desdites pièces assez longue pour accumuler un nombre de pièces déterminé, dans lesquels la zone de stockage forme au moins une boucle, dans lesquels la zone d'entrée se trouve à un niveau plus élevé que la zone de sortie et dans lesquels la zone de stockage est une rampe hélicoïdale. Aucun de ces documents ne mentionne ni ne suggère d'associer des moyens de chauffage à des dispositifs accumulateurs.

Le document EP 0 715 926 décrit une installation pour la fabrication de tuyaux d'irrigation goutte à goutte selon la préambule de la revendication 1. Le préchauffage des goutteurs n'est ni décrit ni suggéré dans ce document.

La présente invention a pour but de remédier aux inconvénients susmentionnés ainsi qu'à d'autres encore en procurant un dispositif accumulateur compact permettant d'atteindre les grandes cadences de fabrication recherchées.

A cet effet, la présente invention concerne une installation de fabrication de tuyaux d'irrigation goutte à goutte telle que définie par la revendication 1 du brevet.

Grâce à ces caractéristiques, la présente invention procure un dispositif accumulateur de pièces dont la zone de stockage des pièces, au lieu de s'étendre rectilignement, s'inscrit dans un cercle. Pour un même nombre de pièces stockées, l'emprise au sol du dispositif accumulateur selon l'invention est donc réduite, ce qui diminue la place nécessaire pour l'installation d'un tel dispositif et rend sa surveillance par un opérateur plus aisée.

De préférence, la zone d'entrée se trouve à un niveau plus élevé que la zone de sortie.

Ainsi, grâce à cette caractéristique, le mouvement d'avance des pièces le long du chemin de guidage est facilité par l'effet de la gravitation.

Avantageusement, la zone de stockage forme une pluralité de boucles étagées.

Au lieu de stocker les pièces selon un chemin horizontal rectiligne, ces pièces sont stockées verticalement selon plusieurs boucles étagées, ce qui permet de réduire considérablement l'emprise au sol de l'installation.

D'autres caractéristiques et avantages de la présente invention ressortiront plus clairement de la description détaillée qui suit d'un exemple de réalisation du dispositif accumulateur, cet exemple étant donné à titre purement illustratif et non limitatif seulement, en liaison avec le dessin annexé sur lequel :
- la figure 1 est une représentation schématique d'une installation de fabrication de tuyaux d'irrigation du type goutte-à-goutte selon l'invention;
- la figure 2 est une vue de côté selon l'axe général de la ligne de fabrication du dispositif accumulateur;
- la figure 3 est une vue à plus grande échelle du dispositif accumulateur;
- la figure 4 est une vue de dessus du dispositif accumulateur;
- la figure 5 est une vue à plus grande échelle des zones d'entrée et de sortie des goutteurs dans le dispositif accumulateur;
- la figure 6 est une vue en coupe selon la ligne IV-IV du dispositif accumulateur représenté à la figure 4;
- la figure 7 est une vue de face des moyens de soufflage installés en un endroit du dispositif accumulateur pour souffler de l'air et faire avancer les goutteurs;
- la figure 8 est une vue de dessus de la zone du dispositif accumulateur représentée à la figure 7;
- la figure 9 est une vue de face d'un élément soufflant de l'air, et
- la figure 10 est une vue en coupe et de dessus de l'élément soufflant de la figure 9.

La présente invention procède de l'idée générale qui consiste à stocker des pièces dans une ligne de fabrication non plus selon une direction rectiligne horizontale mais selon au moins une boucle. Pour un même nombre de pièces stockées, l'emprise au sol de la zone d'accumulation est donc réduite, ce qui permet de procurer une ligne de fabrication plus compacte nécessitant donc moins de place et dont les différents postes sont plus rapprochés, ce qui facilite la surveillance du bon fonctionnement de la ligne par un opérateur.

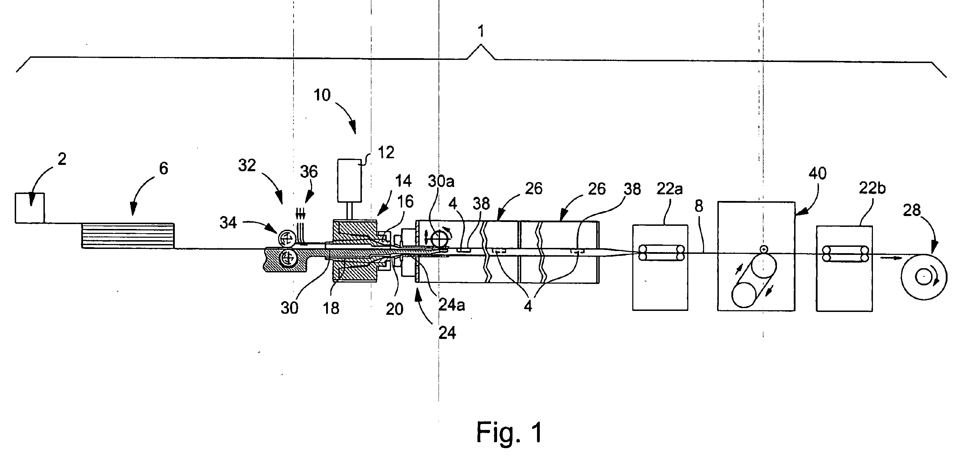

La figure 1 est une représentation schématique d'une ligne de fabrication de tuyaux d'irrigation du type goutte-à-goutte. Désignée dans son ensemble par la référence numérique générale 1, cette ligne de fabrication comprend un magasin 2 tel qu'un bol centrifugeur qui permet de trier, d'orienter et de positionner les goutteurs cylindriques 4 dans un dispositif accumulateur 6 en conformité avec la position qu'ils devront avoir une fois qu'ils seront introduits dans le tuyau d'irrigation 8. A la suite du dispositif accumulateur 6 est disposé un poste d'extrusion 10. Ce poste d'extrusion 10 comprend une chambre de fusion 12 de la matière plastique qui alimente un ensemble 14 pourvu d'une filière 16 à l'intérieur de laquelle est prévu un mandrin conique 18 disposé de telle façon qu'il sorte de la filière 16 une ébauche tubulaire 20. L'ébauche 20 est tirée par des postes de traction 22a et 22b en passant à travers un poste de calibrage 24 et des chambres de refroidissement 26. Au-delà du poste de traction 22b, le tuyau 8 est enroulé sur un tambour 28.

Une telle disposition est classique dans la technique de fabrication des tuyaux en matière plastique. Pour fixer les goutteurs 4, il est prévu que le mandrin 18 présente un passage axial à l'intérieur duquel est disposé un support de guidage 30 qui s'étend jusqu'à l'intérieur du calibreur 24a du poste de calibrage 24. Le support de guidage 30 reçoit les goutteurs 4 à partir du magasin 2 via le dispositif accumulateur 6. Un dispositif de déplacement 32 muni, dans l'exemple représenté, de galets entraîneurs 34 assistés par des jets d'air 36 est prévu pour faire avancer les goutteurs 4 jusqu'à l'intérieur du calibreur 24a. En aval du calibreur 24a, l'ébauche de tuyau 20 dont le diamètre est réduit par le calibreur 24a vient en contact avec le goutteur 4 au moyen d'un galet presseur 30a au moment où sa consistance est encore pâteuse, ce qui assure le thermo-soudage de la face supérieure 38 du goutteur 4 contre la paroi intérieure de l'ébauche 20. En sortant des postes de calibrage 24 et de refroidissement 26, le tuyau 8 pénètre dans un poste de découpe 40 via le premier poste de traction 22a puis en sort pour pénétrer dans le deuxième poste de traction 22b. Dans le poste de découpe 40, le tuyau 8 est percé de petits trous pratiqués en regard des goutteurs 4 et par lesquels l'eau s'écoulera.

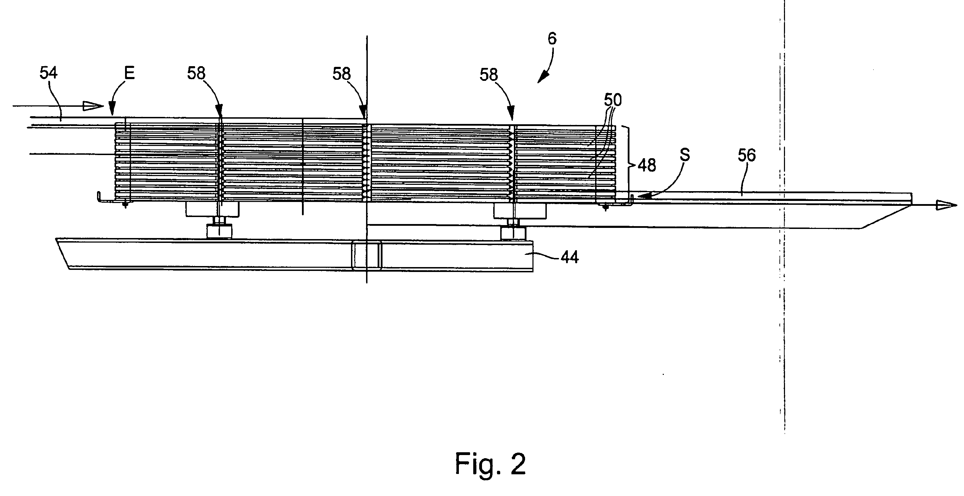

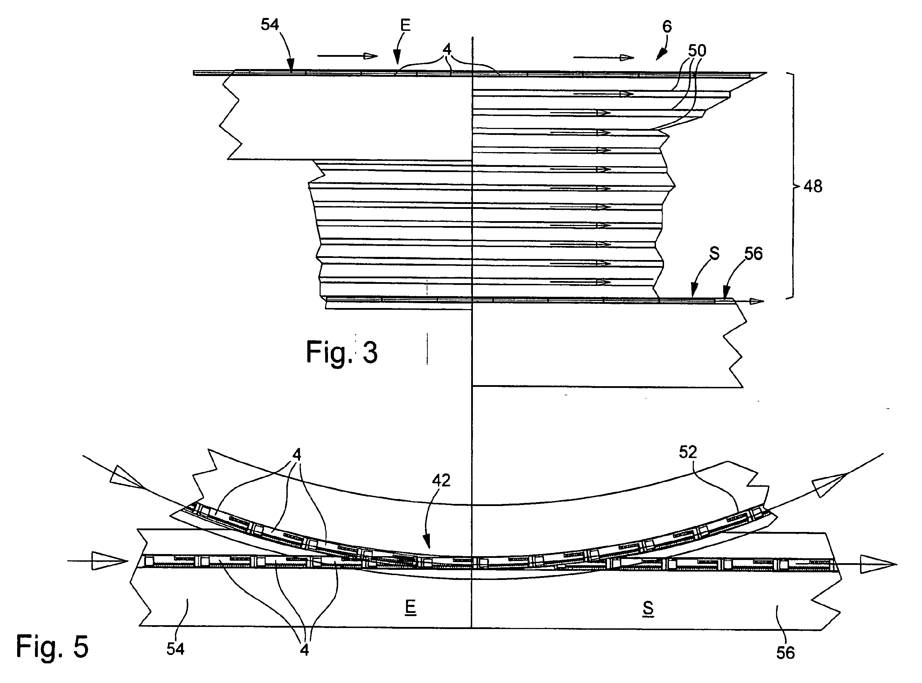

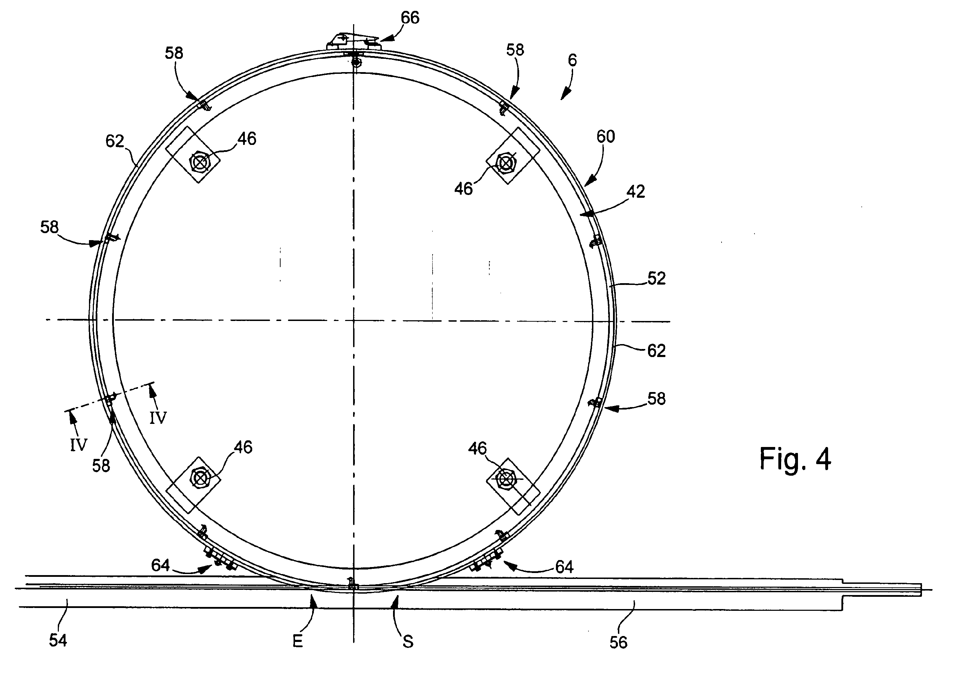

Les figures 2 et 3 sont des vues de côté à plus grande échelle du dispositif accumulateur 6, tandis que la figure 4 est une vue de dessus de ce même dispositif accumulateur 6. Comme il ressort de ces figures, le dispositif accumulateur 6, de forme générale cylindrique, comprend un tambour 42 fixé sur un bâti 44 par le biais d'écrous 46. Une rampe hélicoïdale 48 comprenant au moins une et, préférentiellement, une pluralité de boucles étagées 50 est ménagée dans une paroi du tambour 42, préférentiellement mais non limitativement dans la paroi extérieure 52. A son point d'entrée E, la rampe hélicoïdale 48 est raccordée à une rampe d'alimentation 54 qui fait la jonction entre le magasin 2 et le dispositif accumulateur 6. A son point de sortie S qui est situé à un niveau inférieur à celui de son point d'entrée E, la rampe hélicoïdale 48 est raccordée au support de guidage 30 par lequel les goutteurs 4 font leur entrée dans le dispositif de calibrage 24 par le biais d'une rampe d'évacuation 56. Les goutteurs 4 qui sortent convenablement orientés du magasin 2 pénètrent donc dans le dispositif accumulateur 6 par son point d'entrée le plus haut E et sortent dudit dispositif d'accumulation 6 par son point de sortie le plus bas S. Entre le point d'entrée E et le point de sortie S, les goutteurs 4 descendent progressivement en se poussant les uns les autres et en suivant le chemin matérialisé par la rampe hélicoïdale 48. Plus le pas entre deux boucles 50 successives sera important, plus l'effet de la gravitation sera accentué. On notera à ce sujet que le pas dépendra essentiellement de la taille des goutteurs. Cet effet peut encore être amplifié par la présence, en au moins un endroit du pourtour extérieur du tambour 42, d'un dispositif de soufflage 58 qui souffle de l'air pour faire avancer lesdits goutteurs 4 et qui sera décrit en détail ultérieurement.

La rampe hélicoïdale 48 permet ainsi de créer une zone de stockage où s'accumulent les goutteurs 4 en un nombre suffisant pour permettre de continuer à alimenter la ligne de fabrication 1 en goutteurs 4 pendant une durée déterminée même si l'alimentation est temporairement interrompue par un dysfonctionnement du magasin 2. Ce laps de temps peut être mis à profit par l'opérateur pour interrompre le fonctionnement de la ligne de fabrication 1 ou pour remettre le magasin 2 en ordre de marche, de sorte que les risques de pertes de matière plastique sont réduits. D'autre part, la rampe hélicoïdale 48 permet un stockage vertical des goutteurs 4 plutôt qu'horizontal comme tel était le cas dans l'art antérieur, de sorte que l'emprise au sol du dispositif accumulateur 6 est réduite. On obtient ainsi une ligne de fabrication 1 plus compacte et donc plus facile à surveiller par un opérateur et nécessitant un espace plus restreint.

Pour éviter que les goutteurs 4 ne quittent la rampe hélicoïdale 48 et tombent au sol, ladite rampe hélicoïdale 48 est fermée par un capot 60 enveloppant le tambour 42 et formé de deux pans de couvercle 62. Ces deux pans de couvercle 62 sont articulés à pivotement sur le tambour 42 par le biais de deux charnières 64 et sont maintenus en position fermée par un système d'attache tel qu'une ou plusieurs sauterelles 66.

La figure 5 est une vue à plus grande échelle des zones d'entrée E et de sortie S des goutteurs 4 dans le dispositif accumulateur 6. Comme on peut le voir à l'examen de cette figure, la rampe d'alimentation 54 qui fait la jonction entre le magasin 2 et le dispositif accumulateur 6 au niveau E le plus haut du tambour 42 est disposée tangentiellement à la rampe hélicoïdale 48 de façon que les goutteurs 4, guidés rectilignement par ladite rampe d'alimentation 54, quittent progressivement cette rampe 54 pour pénétrer sur la rampe hélicoïdale 48. Au niveau S le plus bas du tambour 42, la rampe hélicoïdale 48 est raccordée au support de guidage 30 par lequel les goutteurs 4 font leur entrée dans le dispositif de calibrage 24 par le biais de la rampe d'évacuation 56. La rampe hélicoïdale 48 débouche sur la rampe d'évacuation 56 de sorte que les goutteurs 4 quittent ladite rampe hélicoïdale 48 et commencent à cheminer rectilignement sur ladite rampe d'évacuation 56 qui les guide vers le dispositif de calibrage 24. En alternative, la zone d'entrée des goutteurs pourrait se situer au niveau le plus bas et la zone de sortie au niveau le plus haut.

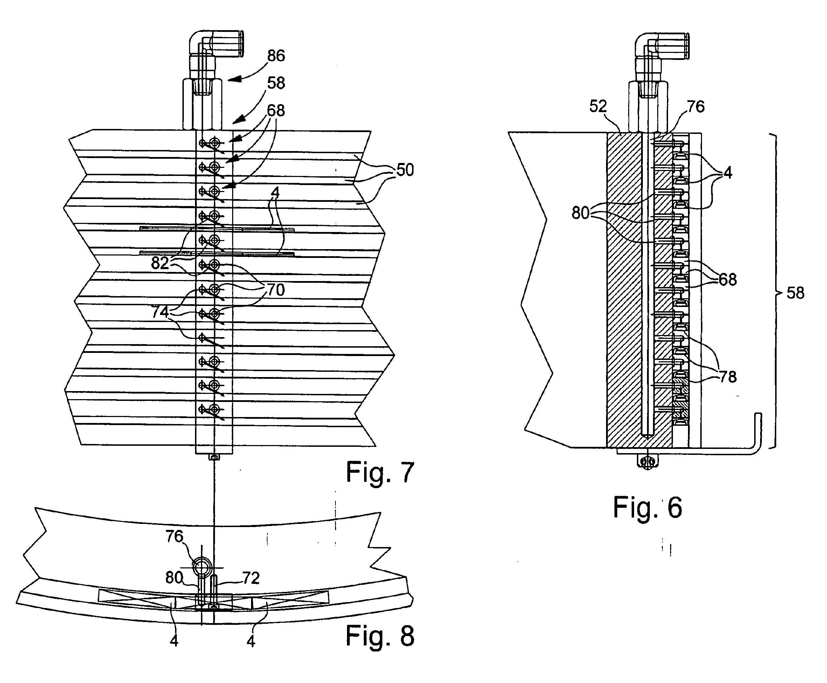

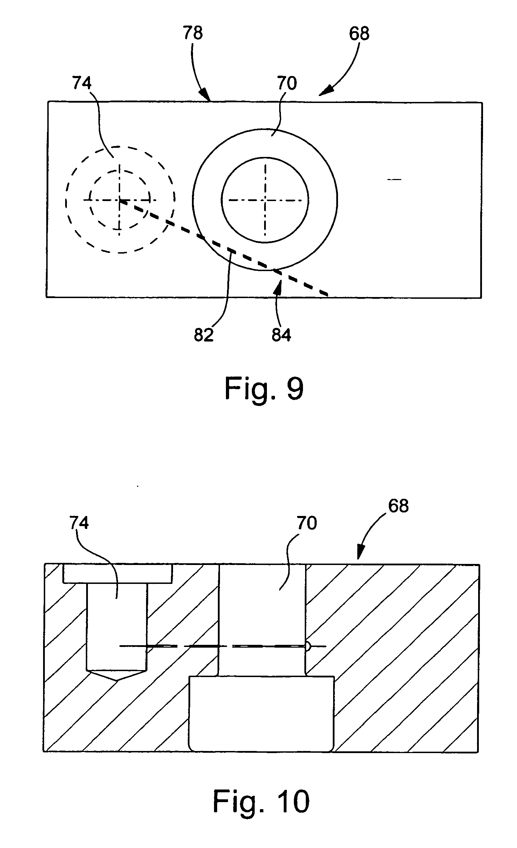

En au moins un endroit du pourtour extérieur du tambour 42 et, de préférence, à intervalles de distance réguliers le long de ce pourtour sont prévus des dispositifs de soufflage 58 qui soufflent de l'air pour faire avancer les goutteurs 4 le long de la rampe hélicoïdale 48. La structure et l'agencement de ces dispositifs de soufflage 58 vont maintenant être décrits en liaison avec les figures 6 à 10.

Comme il ressort des figures susmentionnées, un dispositif de soufflage 58 donné comprend autant d'éléments soufflants 68 que la rampe hélicoïdale 48 comprend de boucles étagées 50. Ces éléments soufflants 68 sont disposés les uns au-dessus des autres et se présentent chacun sous la forme d'un bloc de forme générale parallélépipédique percé d'un trou traversant 70 pour sa fixation, par exemple au moyen d'une vis 72, contre la paroi 52 du tambour 42 et d'un trou borgne 74 par lequel chaque élément soufflant 68 est en communication avec un canal 76 d'amenée de l'air. Le chemin de guidage que forme la rampe hélicoïdale 48 est localement interrompu de façon à ménager un espace suffisant pour le montage des éléments soufflants 68. La surface supérieure 78 des éléments soufflants 68 forme ainsi une partie du chemin de guidage sur lequel glissent les goutteurs 4. Le canal 76 d'amenée de l'air s'étend verticalement à l'intérieur de la paroi 52 du tambour 42 sur pratiquement toute la hauteur de cette paroi 52. Des perçages 80 pratiqués dans l'épaisseur de la paroi 52 en regard des éléments soufflants 68 relient ces derniers au canal 76 d'amenée de l'air. L'air s'échappe des éléments soufflants 68 par des conduits obliques 82 qui, à une première extrémité, débouchent dans les trous borgnes 74 des éléments soufflants 68 et qui, à une seconde extrémité, débouchent à travers la surface inférieure 84 desdits éléments soufflants 68. Des jets d'air arrivent ainsi en biais sur la surface supérieure des goutteurs 4, ce qui fait avancer ces derniers. Le canal 76 est relié à une source d'air sous pression extérieure (non représentée) par un raccord rapide 86.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées.

On peut notamment prévoir que la rampe hélicoïdale 48 soit ménagée dans la paroi intérieure du tambour 42.

On peut également prévoir que la rampe hélicoïdale 48 soit formée par des rails ou d'autres moyens analogues tels que des éléments ayant un profil en U.

On peut également prévoir de revêtir la surface de la rampe 48 d'un revêtement à faible coefficient de frottement pour faciliter la progression des goutteurs 4 le long de cette rampe 48.

On peut également prévoir qu'au moins le dispositif accumulateur 6 soit muni de moyens de chauffage pour amener ou maintenir les goutteurs 4 à une température déterminée typiquement comprise entre 40 et 100°C et préférentiellement de l'ordre de 60°C pour faciliter l'opération ultérieure de soudage des goutteurs 4 contre la paroi intérieure de l'ébauche de tuyau 20. Le magasin 2 peut également comprendre de tels moyens de chauffage. Dans l'exemple de réalisation décrit, ces moyens de chauffage sont des moyens de chauffage électriques à résistance permettant de chauffer l'ensemble du corps du tambour 42 qui communique ensuite sa chaleur aux goutteurs 4.

## Revendications

1. Installation (1) pour la fabrication de tuyaux d'irrigation (8) du type goutte-à-goutte comprenant :
- un poste d'approvisionnement (2) en goutteurs (4);
- un dispositif accumulateur (6) des goutteurs (4);
- un poste d'extrusion (10);
- un poste de calibrage et de soudage (24), et
- un poste de refroidissement (26),
l'installation étant **caractérisée en ce que** le dispositif accumulateur des goutteurs est disposé entre le poste d'approvisionnement (2) en goutteurs (4) et le poste d'extrusion (10), le dispositif accumulateur ayant un chemin de guidage des goutteurs se composant d'une zone d'entrée (E) et d'une zone sortie (S) des goutteurs entre lesquelles s'étend une zone de stockage des goutteurs assez longue pour accumuler un nombre de goutteurs déterminé, dans lequel la zone de stockage forme au moins une boucle (50) et dans laquelle le dispositif accumulateur comprend des moyens de chauffage des goutteurs.

2. Installation (1) selon la revendication 1, **caractérisée en ce que** le poste d'approvisionnement (2) comprend des moyens de chauffage des goutteurs (4).

## Claims

1. Installation (1) for manufacturing an irrigation pipe (8) of the drip type including:
- a dripper (4) feed station (2);
- a dripper (4) accumulating device (6);
- an extrusion station (10);
- a calibrating and welding station (24), and
- a cooling station (26),
the installation being **characterized in that** the dripper accumulating device is located between the dripper (4) feed station (2) and the extrusion station (10), the accumulating device having a dripper guiding path comprising an entry zone (E) and an exit zone (S) of the drippers between which extends a dripper storing zone which is sufficiently long for accumulating a given number of drippers, the storing zone forming at least one lap (50) and wherein the accumulating devices comprises means for heating the drippers.

2. Installation (1) according to claim 1, **characterized in that** the feed station (2) includes dripper (4) heating means.

## Patentansprüche

1. Anlage (1) für die Herstellung eines Schlauchs (8) zur Tropfbewässerung, die umfasst:
- eine Station (2) für die Versorgung mit Tropfenspendern (4);
- eine Sammelstation (6) für Tropfenspender (4);
- eine Strangpressstation (10);
- eine Kalibrierungs- und Verschweißungsstation (24) und
- eine Kühlungsstation (26),
wobei die Anlage **dadurch gekennzeichnet ist, dass** die Tropfenspender-Sammelstation zwischen der Station (2) für die Versorgung mit Tropfenspendern (4) und der Strangpressstation (10) angeordnet ist, wobei die Sammelstation einen Weg für die Führung der Tropfenspender besitzt, der aus einer Eintrittszone (E) und einer Austrittszone (S) der Tropfenspender gebildet ist, zwischen denen sich eine ausreichend lange Zone zum Lagern der Tropfenspender erstreckt, um eine bestimmte Anzahl von Tropfenspendern zu sammeln, wobei in dem Weg die Lagerzone wenigstens eine Schleife (50) bildet und in der Schleife die Sammelvorrichtung Mittel zum Erwärmen der Tropfenspender umfasst.

2. Anlage (1) nach Anspruch 1, **dadurch gekennzeichnet, dass** die Versorgungsstation (2) Mittel zum Erwärmen der Tropfenspender umfasst.
